# EUROPÄISCHE PATENTANMELDUNG

(11) **EP 3 584 041 A1**
(43) Veröffentlichungstag der Anmeldung: **25.12.2019**
(21) Anmeldenummer: 19000294.9
(22) Anmeldetag: 17.06.2019
(51) Int. Cl.: B25J 9/16

(54) **VERFAHREN ZUM VERBINDEN VON BAUTEILEN**

(30) Priorität: 20.06.2018 DE 102018114867
(71) Anmelder: B. Strautmann & Söhne GmbH u. Co. KG, 49196 Bad Laer (DE)
(72) Erfinder: Strautmann, Philipp, 49080 Osnabrück (DE)
(74) Vertreter: Träger, Denis

(57) **Zusammenfassung**

Die Erfindung betrifft ein Verfahren zur Verbindung von Bauteilen (10, 11, 35, 36, 36', 39, 40, 45, 46, 46', 52, 53, 54, 55, 59, 68, 69) auf Basis eines EDV-Arbeitsbasisprogrammes und mit Hilfe eines on- oder offline-programmierbaren, lernfähigen Industrieroboters (12) mit einem daran gekoppelten optischem Bilderkennungssystem (13), bei welchem sich die Bewegungsabläufe wenigstens eines Arbeitswerkzeugs (14) des Industrieroboters (12) in einen an den Industrieroboter gekoppelten Datenspeicher (15) einprogrammieren oder einteachen lassen.

Bekannte Verfahren beinhalten entweder komplexe Steuerungsprogramme zur Herstellung von Baugruppen-Varianten oder je Baugruppen-Variante individuelle Einzelprogramme. Um den Programmieraufwand zu reduzieren und gleichzeitig nicht für jede Baugruppen-Variante jeweils ein individuelles Programm erstellen zu müssen, wird vorgeschlagen, dass:
- die miteinander zu verbindenden Bauteile (10, 11, 35, 36, 36', 39, 40, 45, 46, 46', 52, 53, 54, 55, 59, 68, 69) provisorisch geheftet oder in einer Spannvorrichtung (16), vorzugsweise in einem beweglichen Manipulator (17) fixiert werden;
- das optische Bilderkennungssystem (13) die zu verbindenden Bauteile (10, 11, 35, 36, 36', 39, 40, 45, 46, 46', 52, 53, 54, 55, 59, 68, 69) erfasst und auf das Vorhandensein von wenigstens einer in oder an den Bauteilen (10, 11, 35, 36, 36', 39, 40, 45, 46, 46', 52, 53, 54, 55, 59, 68, 69) angebrachten Markierung (20; 21) überprüft;
- eine vom optischen Bilderkennungssystem (13) erfasste Markierung (20; 21) mit einem im Datenspeicher (15) des Industrieroboters (12) hinterlegten Satz von Markierungen abgeglichen wird, wobei wenigstens eine im Datensatz des Industrieroboters (12) hinterlegte Markierung jeweils wenigstens einen Steuerbefehl für den Industrieroboter (12) definiert.

## Beschreibung

Die Erfindung betrifft ein Verfahren zum Verbinden, vorzugsweise zum Verkleben oder Verschweißen, von Bauteilen auf Basis eines EDV-Arbeitsbasisprogrammes und mit Hilfe eines on- oder offline-programmierbaren, lernfähigen Industrieroboters mit einem daran gekoppelten optischen Bilderkennungssystem. Bei dem Verfahren lassen sich die Bewegungsabläufe wenigstens eines Arbeitswerkzeugs des Industrieroboters in einen an den Industrieroboter gekoppelten Datenspeicher einprogrammieren oder einteachen. Die Erfindung betrifft weiterhin für das Verfahren geeignete Bauteile.

Zur Erstellung von Roboterprogrammen gibt es die Verfahren "Online-Programmierung" und "Offline-Programmierung", die oft auch kombiniert eingesetzt werden. Die meisten modernen Robotersteuerungen enthalten eine komplexe Programmierumgebung, in die noch weitere Werkzeuge integriert sein können. So besteht in der Regel eine nahtlose Einbindung von Modulen, mittels denen externe Sensoren, wie z.B. ein Kamerasystem, in das Roboterprogramm eingebunden werden können. Das Verhalten des Roboters kann so an äußere Einflüsse angepasst werden:
Unter Online-Programmierung wird die Programmierung des Roboters direkt am oder mit dem Roboter selbst verstanden. Zu den Verfahren der Online-Programmierung zählen beispielsweise das Teach-In-Verfahren und das Playback-Verfahren.

Beim Teach-In-Verfahren (kurz: Teachen) fährt der Programmierer den Roboter mit einer Steuerkonsole in die gewünschte Position. Alle so erreichten Koordinaten (Punkte) werden in der Steuerung gespeichert. Dieser Schritt wird solange wiederholt, bis der gesamte Arbeitszyklus einmal durchlaufen ist. Der Programmablauf besteht darin, dass der Roboter alle gespeicherten Punkte automatisch anfährt. Für die Bewegung zwischen den einzelnen Punkten können Parameter eingegeben werden. So sind die Geschwindigkeit und die Beschleunigung einstellbar, bei einigen Robotern ist auch eine Angabe der notwendigen Genauigkeit möglich.

Unter Offline-Programmierung wird eine Programmierung des Roboters verstanden, bei der der Roboter selbst nicht benötigt wird. Die Programmentwicklung erfolgt somit Offline an einem vom Roboter unabhängigen Computer. Zu den Verfahren der Offline Programmierung zählen beispielsweise die Textuelle Programmierung, die CAD gestützte Programmierung und die Makroprogrammierung. Die Offline-Programmierung einer Aufgabe (beispielsweise Verbindung von Bauteilen) erfolgt indirekt mit Hilfe von simulationsgestützten Systemen, durch die sich die Bewegungsabläufe am Bildschirm generieren bzw. simulieren lassen.

Die Verfahren zur Verbindung von Bauteilen aus Metall auf Basis eines EDV-Arbeitsbasisprogrammes und mit Hilfe eines Industrieroboters sind in der Patentliteratur vertreten. Beispielsweise ist in WO 2012 094 689 ein Verfahren zum Verschweißen von Bauteilen offenbart, bei dem ein Schweißroboter dadurch angelernt wird, dass zwischen dem Schweißdraht und dem Bauteil eine Prüfspannung angelegt und anschließend ein Positioniervorgang mit dem Schweißkopf fortgeführt wird. Nachteilig bei dem Verfahren ist, dass der Positioniervorgang manuell durchgeführt werden muss.

DE 10 2011 005 004 A1 beschreibt ein Verfahren zur Überwachung eines Lateralversatzes eines Ist-Schweißnahtverlaufs gegenüber einem Soll-Schweißnahtverlauf, insbesondere im Kraftfahrzeugbau. Eine Rückstrahlung aus der Schmelze wird durch ein optisches System, wie einer Fotodiode, erfasst. Werden die Abweichungen von dem Laserstrahl überfahren, so kommt es zu einer Veränderung der Rückstrahlung.

Bekannte Verfahren beinhalten somit entweder komplexe Steuerungsprogramme zur Herstellung von Baugruppen-Varianten oder benötigen je Baugruppen-Variante individuelle Einzelprogramme, bei denen für jeden Einzelfall eine individuelle Programmierung beziehungsweise ein individuelles einteachen erforderlich ist.

Aufgabe der Erfindung ist es ein Verfahren der eingangs genannten Art vorzuschlagen, das die beschriebenen Nachteile beseitigt. Das Verfahren soll es ermöglichen, unterschiedliche Teile miteinander zu verbinden ohne dass der Anwender hierfür eine komplexe Programmierung durchführen oder viele individueller Einzel-Programme erstellen muss.

Diese Aufgabe ist gelöst durch ein Verfahren mit den Merkmalen des Anspruchs 1.

Bei den zu verbindenden Bauteilen handelt es sich vorzugsweise um Teile aus Kunststoff oder Metall, da diese besonders gut miteinander verschweißbar sind. Bei der zwischen den Bauteilen herzustellenden Verbindung handelt es sich vorzugsweise um eine unlösbare Verbindung, wie eine Schweiß-, Kleb- oder Lötverbindung

Der Kern der Erfindung liegt darin, dass die geometrische Gestaltung bzw. Dimensionierung von Bauteilen von untergeordneter Bedeutung ist. Wesentlich ist vielmehr, dass die Bauteile vordefinierte Markierungen aufweisen, denen bestimmte Steuerbefehle für den Roboter zugeordnet sind und bei deren Erkennen der Roboter einen eindeutigen Handlungsbefehl erhält.
Die Steuerung bzw. die Bewegung des Arbeitskopfes des Roboters kann somit ausgeführt werden, ohne dass eine optische Rückkopplung notwendig ist. Handelt es sich bei dem Roboter um einen Schweißroboter bedeutet dies, dass der Bewegungsablauf festliegt, bevor der Lichtbogen eingeschaltet wird.

Die absolute Positioniergenauigkeit von Industrierobotern schwankt je nach Hersteller, Alter und Beanspruchung zwischen wenigen Zehnteln und mehreren Millimetern. Auch die Fertigungsgenauigkeit von vom Roboter zu bearbeitenden Teilen sowie deren Positionierung unterliegt einer gewissen Schwankungsbreite.

Bei Kopplung eines optischen Systems an einen Roboter beeinflussen weiterhin Faktoren wie beispielsweise der Blickwinkel auf die zu erkennenden Teile, Entfernungen und Lichtverhältnisse die Mess- und Wiedererkenn-Ergebnisse.

Um zu gewährleisten, dass das Bildverarbeitungssystem die auf den Bauteilen angebrachte Markierungen und Gestaltungen sicher wiedererkennt, ist es vorteilhaft, die Bauteile und deren Markierungen unter unterschiedlichen Verhältnissen und Blickwinkeln wiederholt mit dem jeweils vordefinierten Steuerbefehl zu verknüpfen. Je häufiger nun eine bestimmte Gestaltung bzw. eine bestimmte Markierung aus immer wieder unterschiedlichen Blickwinkeln und Lichtverhältnissen oder an unterschiedlichen Bauteile mit der Kamera aufgenommen und dann jedes Mal mit dem vordefinierten Steuerbefehl verknüpft wird, desto größer ist die Wahrscheinlichkeit, dass das System die Gestaltung im echten Arbeitseinsatz auch wiedererkennt und hieraus die richtigen Schlussfolgerungen zieht, nämlich den richtigen Steuerbefehl anwendet.

Der jeweilige Steuerbefehl wird somit wiederholt und unter möglichst vielen unterschiedlichen Bedingungen eingeteacht. Das "einteachen" kann beispielsweise 100mal wiederholt werden, um so eine sehr hohe Wiedererkennungswahrscheinlichkeit im späteren Arbeitseinsatz, beispielsweise eine 99,5-prozentige Wiedererkennungswahrscheinlichkeit, zu erreichen.

Da auch die wiedererkannte Gestaltung noch kleine Abweichungen zu den 100-mal eingeteachten Gestaltungen aufweisen kann, kann auch vorgesehen sein, dass die im Arbeitseinsatz wiedererkannte Markierung als weiterer Treffer mit dem vordefinierten Steuerbefehl verknüpft wird und so die 101 eingeteachte Verknüpfung bildet. Wird die 101 eingeteachte Verknüpfung zusätzlich in den Datensatz des Industrieroboters hinterlegt, so steigt bei nachfolgenden Untersuchungen die Wahrscheinlichkeit einer korrekten Wiedererkennung über den beispielhaft genannten Wert von 99,5% leicht an, zum Beispiel auf 99,51%. Das System ist somit selbstlernend.

Der Arbeitseinsatz erfolgt, nachdem die abzuarbeitenden Steuerbefehle eingeteacht worden sind. Im Arbeitseinsatz werden erfindungsgemäß somit:
- die miteinander zu verbindenden Bauteile provisorisch geheftet oder in einer Spannvorrichtung, vorzugsweise in einem beweglichen Manipulator fixiert;
- die zu verbindenden Bauteile vom optischen Bilderkennungssystem erfasst und auf das Vorhandensein von wenigstens einer in oder an den Bauteilen angebrachten Markierung überprüft;
- eine vom optischen Bilderkennungssystem erfasste Markierung mit einem im Datenspeicher des Industrieroboters hinterlegten Satz von Markierungen abgeglichen, wobei wenigstens eine im Datensatz des Industrieroboters hinterlegte Markierung wenigstens einen Steuerbefehl für den Industrieroboter definiert.

Als Markierung kann beispielsweise eine an einer Verbindungskante eingearbeitete, beispielsweise gefräste, Aussparung oder Ausklinkung vorgesehen sein. Dabei können unterschiedliche geometrische Formen, wie Drei- oder Rechteck, Halbkreis, oder deren Kombination miteinander verknüpft werden uns so eine vordefinierte Markierung bilden, die mit einem bestimmten Steuerbefehl verknüpft wird. Alternativ zu einer Aussparung oder Ausklinkung kann aber auch eine Gravur, insbesondere eine Lasergravur, ein Aufdruck oder ein maschinenlesbarer Strichcode eine Markierung bilden und mit einem bestimmten Steuerbefehl verknüpft werden. Wesentlich ist nicht die Art der Markierung, sondern die Erkennbarkeit der Markierung durch das optische Bilderkennungssystem.

Da die im Arbeitseinsatz vom optischen Bilderkennungssystem erfassten Markierungen aus den genannten Gründen, wie unterschiedlichen Lichtverhältnissen und Blickwinkeln von den im Datensatz des Industrieroboters hinterlegten Markierungen abweichen können, kann vorgesehen sein, dass ein bestimmter Steuerbefehl einer tatsächlich erfassten Markierung auch dann zugeordnet wird, wenn keine 100-prozentige Übereinstimmung zwischen der erfassten Markierung und der im Datensatz hinterlegter Markierung besteht. Allerdings soll der graduell abweichenden Markierung ein Steuerbefehl nur dann zugeordnet werden, wenn die Größe der Abweichung sich in einem zulässigen Bereich bewegt.

Auf Basis statistischer Methoden lässt sich die Wahrscheinlichkeit dafür definieren, dass die vom Bilderfassungssystem erfasste abweichende Markierung der im Datensatz hinterlegten Markierung entspricht erfassen. Weist das vom Bilderkennungssystem erfasste Bild einer Markierung eine Wahrscheinlichkeit in einer vordefinierten Größe dafür auf, dass es sich bei der erfassten Markierung um eine im Datensatz hinterlegte Markierung handelt, wird dieser abweichenden Markierung der entsprechende Steuerbefehl zugeordnet. Diese Zuordnung soll dann erfolgen, wenn die Wahrscheinlichkeit dafür, dass es sich bei der erfassten Markierung um eine im Datensatz hinterlegte Markierung handelt, größer als 95% ist. In diesem Fall wird somit der abweichenden Markierung derjenige Steuerbefehl zugeordnet, der der im Datenspeicher hinterlegten Markierung zugeordnet ist.

In einer ersten Ausgestaltung des erfindungsgemäßen Verfahrens kann vorgesehen sein, dass bei Feststellung einer Übereinstimmung der vom optischen Bilderkennungssystem erfassten Markierung mit einer im Datensatz des Industrieroboters erfassten Markierung der der Markierung zugeordnet unmittelbar Steuerbefehl ausgeführt und die Bauteile miteinander verbunden werden. Dies ist besonders dann vorteilhaft, wenn nur eine einzige Verbindungsstelle vorgesehen ist. Die Verbindung kann somit auch ohne weitere Untersuchung des restlichen Bauteils unmittelbar ausgeführt werden, wenn diese einzige Markierung detektiert worden ist.

Weiterhin kann vorgesehen sein, dass das optische Bilderkennungssystem nach Erstellen einer ersten Verbindungsstelle die Bauteile auf das Vorhandensein einer weiteren in oder an den Bauteilen vorhandenen Markierung überprüft und bei Feststellung einer solchen Markierung vom Industrieroboter die aus der Markierung ableitbaren Steuerbefehle ausgeübt werden. So kann Schritt für Schritt eine Verbindungstelle nach der anderen detektiert und der jeweilige Steuerbefehl ausgeführt werden.

Alternativ zu der beschriebenen sofortigen Steuerbefehl-Ausführung oder der schrittweisen Abarbeitung von Steuerbefehlen jeweils nach dem Auffinden einer Markierung kann auch vorgesehen sein, dass das Bilderkennungssystem zunächst wenigstens zwei, vorzugsweise alle, an den in der Spanvorrichtung fixierten Bauteilen enthaltenen Markierungen erfasst. Die aus den Markierungen ableitbaren Steuerbefehle können danach in das einprogrammierte oder eingeteachte EDV-Arbeitsbasisprogramm des Industrieroboters integriert werden. Im Ergebnis wird somit ein auf das Verbinden der Bauteile bezogenes EDV-Gesamtprogramm erstellt. Die Bauteile werden dann auf Basis des Gesamtprogramms miteinander verbunden. Besonders vorteilhaft hieran ist, dass weitere im Datenspeicher hinterlegte Parameter, wie optimierte Aneinanderreihung der Steuerbefehle oder Berücksichtigung von Besonderheiten, wie einer einzuhaltenden Reihenfolge der Steuerbefehl-Abarbeitung.

Es können zugleich mehrere zeitliche Abfolgen von Markierungen durch das optische Bilderkennungssystem erfasst und bei Feststellung einer solchen Abfolge die aus der Markierung ableitbaren Steuerbefehle durch den Industrieroboter ausgeübt werden. So können mehrere, in einer Spannvorrichtung fixierte Bauteile einer komplizierten Metallkonstruktion miteinander verbunden werden.

In einer bevorzugten Ausgestaltung des Verfahrens erfasst das optische Bilderkennungssystem zunächst alle an den Bauteilen eingebrachten Markierungen. Folglich können danach alle aus den Markierungen ableitbaren Steuerbefehle in das einprogrammierte oder eingeteachte EDV-Arbeitsbasisprogramm des Industrieroboters integriert werden. Das für das Verbinden der Bauteile zu erstellende EDV-Gesamtprogramm kann automatisch erstellt und direkt hinsichtlich vordefinierter Kriterien, wie der benötigten Ausführungszeit, optimiert werden. Die Bauteile können dann auf Basis des so entstandenen Gesamtprogramms miteinander verbunden werden.

Unter dem Begriff "Industrieroboter" wird im Weiteren ein Schweißroboter verstanden, mit dem ein autonomes Fügeverfahren zweier oder mehrerer Werkstücke aus Metall durch automatisiertes Schweißen durchführbar ist.

Grundsätzlich ist das erfindungsgemäße Verfahren geeignet um unlösbare Bauteile auf verschiedenste Arten miteinander zu Verbinden. In Betracht kommt insbesondere die Herstellung von Kleb-, Löt-, oder Schweißverbindungen. Besonders bevorzugt ist die Anwendung des erfindungsgemäßen Verfahrens an einem Schweißroboter, insbesondere einem Schweißroboter für Metallteile, und somit zum Verschweißen von Einzelteilen zu einer Schweißbaugruppe.

Die im Datenspeicher hinterlegten Steuerbefehle stellen wenigstens eine, vorzugsweise mehrere der folgenden Informationen für das auszuführende EDV-Gesamtprogramm bereit:
- einen Startpunkt und/oder einen Endpunkt einer Schweißnaht und/oder
- eine Schweißnahtform, beispielsweise eine Kehlnaht und/oder
- eine Drahtvorschub-Geschwindigkeit in Verbindung mit einer BewegungsGeschwindigkeit des Schweißkopfes, so dass aus Drahtvorschub-Geschwindigkeit und Schweißkopf-Geschwindigkeit eine vordefinierte Schweißnahtdicke realisierbar ist und/oder
- eine zeitliche Abfolge oder Priorisierung des Anbringens einer Schweißnaht in Bezug auf eine andere Schweißnaht.

Weiterhin können vordefinierte no-go-areas zur Erhöhung der Arbeits- und/oder Funktionssicherung für die Bewegungssteuerung des Industrieroboters vorgesehen sein, welche im Datenspeicher hinterlegt und bei Generierung des EDV-Gesamtprogrammes berücksichtigt werden. Eine no-go-area kann beispielsweise als Teilmarkierung am Bauteil vorliegen. Eine no-go-area kann aber auch ein Bereich sein, den das optische Bilderkennungssystem als Bauteil-Kontur erkannt hat, die zur Vermeidung eines Crashs nicht kontaktiert werden darf.

Das erfindungsgemäße Verfahren kann bei unterschiedlichen Schweißtechniken, wie beispielsweise beim Lichtbogen-Schweißverfahren mit Einzel- oder Doppeldraht-Zuführung, beim Laser- oder Bolzen-Schweißverfahren und bei anderem Schweißverfahren Anwendung finden.

Weitere Vorteile des Verfahrens gemäß der Erfindung sind:
- das einfache Positionieren und Spannen der Einzelbauteile zur Herstellung einer Schweiß-Baugruppe;
- die Zugänglichkeit des Schweißroboters zu den einzelnen Schweißnähten in optimaler Schweißposition;
- das Handling der Bauteilzuführung;
- die Möglichkeit, die Bauteile bzw. die Schweißbaugruppe währende des Schweißens stetig optimal zu positionieren;
- die mehrachsigen Bewegungen des Schweißroboters während des Schweißens.

Das Verfahren gemäß Erfindung kann auch eventuelle Fehler an Bauteilen frühzeitig erkennen, gegebenenfalls nachbessern und dadurch die sich aus den Fehlern ergebenden Nachteile beseitigen oder zumindest reduzieren. Detektiert das Bilderkennungssystem beispielsweise einerseits eine Markierung, der der Steuerbefehl "Anfang einer Schweißnaht an einem bestimmten Startpunkt" zugeordnet ist und ist das Bauteil im Bereich des vorgesehenen Startpunktes beschädigt, so kann für solche Fälle im Arbeitsprogramm ein Not-Aus-Signal oder die Ausgabe einer Störmeldung vorgesehen sein.

Die Erfindung betrifft weiterhin ein Bauteil mit wenigstens einer optisch erkennbaren Markierung zur Verwendung in dem erfindungsgemäßen Verfahren. Vorzugsweise umfasst das Bauteil als Markierung wenigstens eine Aussparung oder Ausklinkung oder eine Gravur, ein Aufdruck oder ein maschinenlesbarer Strichcode vorgesehen. Eine Markierung kann mehrere Teilmarkierungen aufweisen. Beispielsweise können drei hintereinander angeordnete Dreiecke als Gesamt-Markierung verstanden werden, der der Steuerbefehl zur Erstellung einer Kehlnaht mit einer Schweißnahtdicke von 3 mm zugeordnet ist.

Die Erfindung wird in mehreren Ausführungsbeispielen anhand der Zeichnung näher erläutert. Die Figuren zeigen:
- Fig. 1: eine Anlage zum automatischen Schweißen mit Hilfe eines Schweißroboters, in einer schematischen Ansicht;
Fig. 2 ein Blockschema der Anlage gemäß Fig. 1;
Fig. 3 Markierungselemente zur Verwendung an Bauteilen;
- Fig. 4: eine Schweißverbindung zweier, eine T-Konfiguration bildenden Bauteile mit versetzt unterbrochenen Kehlnähten, in einer perspektivischen Ansicht,
- Fig. 5: die verschweißten Bauteile gemäß Fig. 4, mit sichtbaren Kehlnähten, in einer Draufsicht auf eine Flachseite des T-Stegs;
- Fig. 6: eine Schweißverbindung zweier, eine T-Konfiguration bildenden Bauteile mit symmetrisch unterbrochenen Kehlnähten, in einer perspektivischen Ansicht;
- Fig. 7: die verschweißten Bauteile gemäß Fig. 6, mit sichtbaren Kehlnähten, in einer Draufsicht auf eine Flachseite des T-Stegs;
- Fig. 8: eine Verbindung zweier C-Profile über unterbrochene aufgeweitete Y-Nähte, in einer perspektivischen Ansicht;
Fig. 9 ein Detail "z" gemäß Fig. 9;
- Fig. 10: eine Schweißbaugruppe bestehend aus zwei auf ein Plattenelement gestellten Winkelprofilen, mit angedeuteten Markierungen, in einer perspektivischen Ansicht;
Fig. 11 die Schweißbaugruppe gemäß Fig. 10, in einem Querschnitt;
Fig. 12 eine Detailansicht der in Fig. 10 eingebrachten Markierungen;
- Fig. 13: eine erweiterte Schweißbaugruppe gemäß Fig. 10, mit aufgesetzten Bauteilen, in einer perspektivischen Ansicht;
- Fig. 14: ein Detail der Schweißbaugruppe gemäß Fig. 13, die aufgesetzten Bauteile mit den L-Schenkeln der Winkelprofile, in einer perspektivischen Ansicht;
- Fig. 15: eine Schweißbaugruppe bestehend aus zwei auf ein Plattenelement hochkant gestellten C-Profilen, mit angedeuteten Markierungen, in einer perspektivischen Ansicht;
- Fig. 16: eine räumliche Schweißbaugruppe mit sichtbaren Markierungen/Ausklinkungen an Verbindungsstellen, in einer perspektivischen Ansicht;
- Fig. 17: die Anordnung eines Winkelprofils an einem Plattenelement, mit sichtbaren Markierungen am Winkelprofil, in einer perspektivischen Ansicht;
- Fig. 18: Anordnung gemäß Fig. 17 mit Sicht auf die andere Seite des Winkelprofils, ebenso in einer perspektivischen Ansicht;
- Fig. 19: das mit dem Plattenelement verschweißte Winkelprofil gemäß Fig. 17, in einem Querschnitt.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

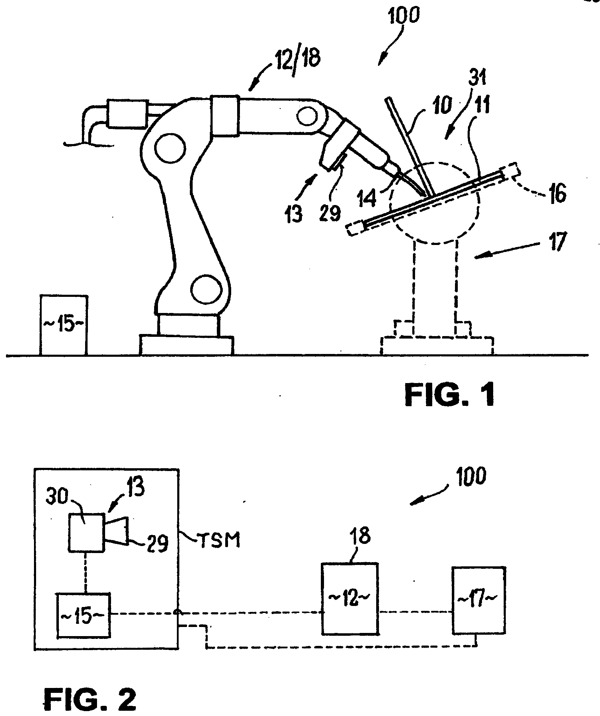

Eine in Figuren 1 und 2 schematisch dargestellte Anlage 100 umfasst einen Industrieroboter 12, ein mit dem Industrieroboter 12 gekoppelten Bilderkennungssystem 13, einem Datenspeicher 15 und eine an einem Manipulator 17 gelagerte Spannvorrichtung 16. Der Manipulator 17 übernimmt die Handhabung schwerer Bauteile 10, 11, die positioniert werden sollen. Da die Anlage 100 für Schweißprozesse konzipiert ist, wird als Industrieroboter 12 ein an sich bekannter Schweißroboter 18 eingesetzt.

Das Bilderkennungssystem 13 umfasst eine Kamera 29 (vgl. Blockschema Fig. 2) und wenigstens einen optischen bzw. optoelektronischen Sensor 30, mit welchem mittels Licht exakte Positionierungen und Reichweiten in einem breiten Bereich unabhängig vom Material des zu erfassenden Bauteils realisiert werden können. Ferner bildet das Bilderkennungssystem 13 zusammen mit dem Datenspeicher 15 ein trainierbares, mit dem Schweißroboter 18 gekoppeltes Steuerungsmodul TSM (Controller) aus.

Die Signalübertragung kann über eine elektrische Leitung oder kabellos erfolgen. Mit dem Einsatz des Steuerungsmodul TSM erübrigen sich die bisher notwendigen Schritte einer manuell vorbereiteten Positionsprüfung und/oder Kantenfindung der Bauteile, da die Informationen direkt von Sensoren 30 zu Robotergelenken - nach ausreichendem mehrfachen Trainieren - fließen können.

Der Schweißroboter 18 verfügt über ein Arbeitswerkzeug 14, welches im vorliegenden Fall einen Lichtbogen-Schweißkopf mit Einzeldraht-Zuführung darstellt.

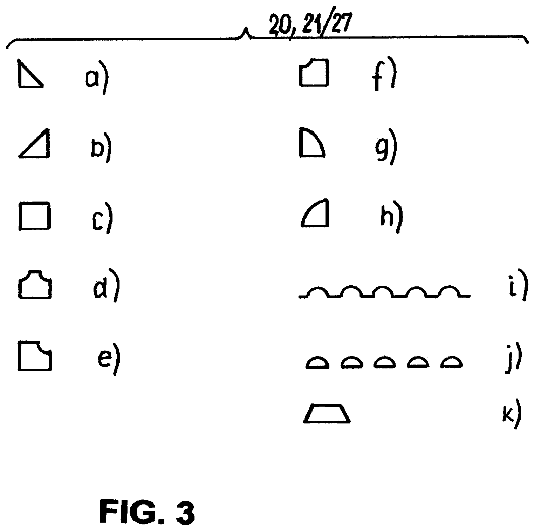

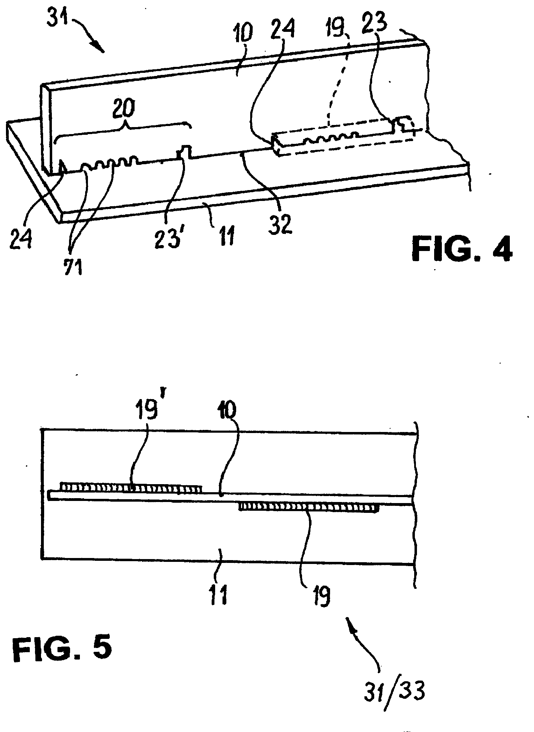

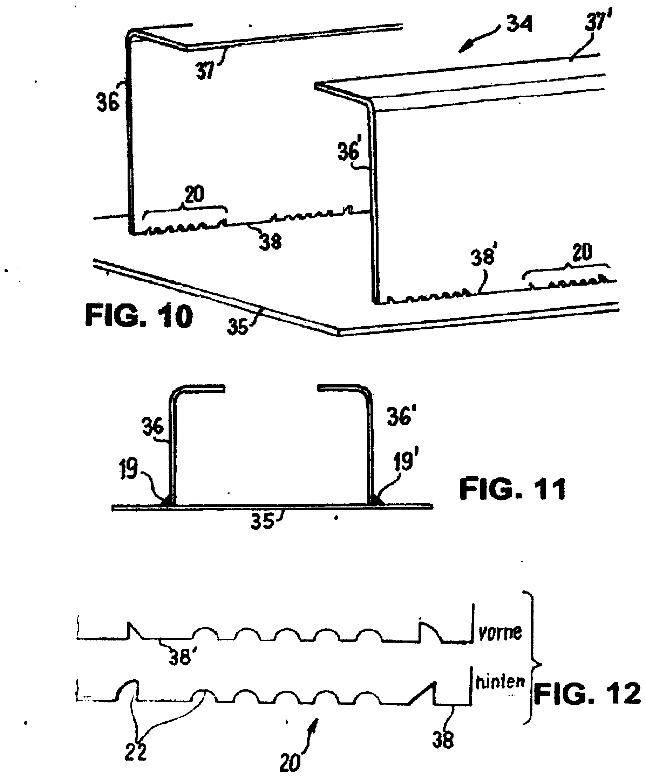

Wie der Fig. 1 zu entnehmen ist, werden die zu verbindenden Bauteile 10, 11 von der Spannvorrichtung 16 gehalten. Die beiden Bauteile 10, 11 sind plattenförmig und bilden eine T-förmige Schweißbaugruppe 31 aus. Um die bereits erlernten, bauteilunabhängigen Schweißvorgänge durchführen zu können, sind an einer Längskante 32 (vgl. Fig. 4) des Bauteils 10 (Mittelsteg) Markierungen 20 eingebracht, welche von dem Bilderkennungssystem 13 erfasst werden. Die Markierung 20 liegt in Form einer Sequenz (Abfolge) von an der Längskante 32 gefrästen dreieckigen, rechteckigen und/oder halb- oder viertelkreisförmigen Ausklinkungen (Aussparungen 22; vgl. Fig. 12) vor, deren Umrisse in Fig. 3; Punkte a) bis j), zu sehen sind.

Die Markierungen 20 zum Ziehen einer Schweißnaht 19, 19' umfassen jeweils einen Startpunkt 23, 23' (Ausklinkungen "e" und "f" gemäß Fig. 3), eine Reihe von Halbkreisen 71 (Ausklinkungen "i" gemäß Fig. 3) und schließlich einen Endpunkt 24 (Ausklinkung "a" bzw. "b" gemäß Fig. 3). Die Schweißnaht 19 (Kehlnaht) ist in Fig. 4 mit Strichlinien bezeichnet.

Der Schweißroboter 18 führt die Kamera 29 des Bilderkennungssystems 13 über/an die zu verbindenden Bauteile 10, 11. Die Position, in welcher der Schweißkopf (Arbeitswerkzeug 14) eine Schweißnaht 19, 19' abfährt (vgl. Figuren 4 und 5) ergibt sich aus dem sich stets wiederholenden Trainingsprozess. Nach Einbringung der einen Schweißnaht 19 wird die Schweißbaugruppe 31 durch den Manipulator 17 automatisch umgedreht für das Ziehen der anderen, zweiten Schweißnaht 19'. Nach der Verschweißung ist ein T-Stoß 33 mit versetzt unterbrochenen Schweißnähten 19, 19' (vgl. Fig. 5) entstanden.

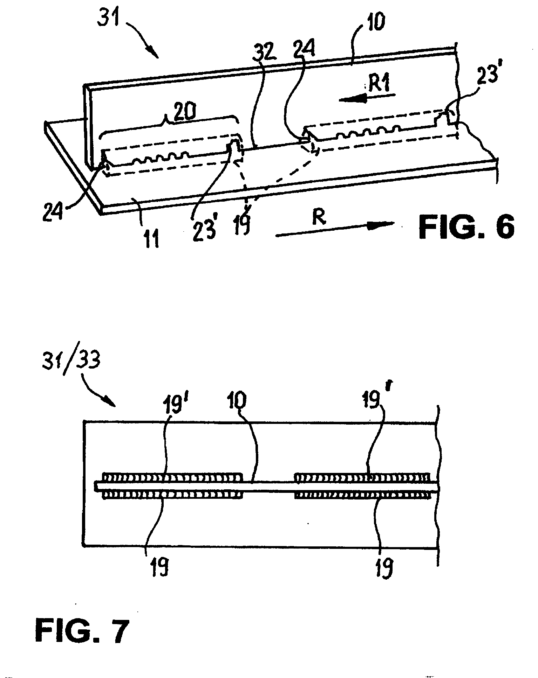

In den Figuren 6 und 7 ist die gleiche T-förmige Schweißbaugruppe 31 mit Bauteilen 10, 11 gezeigt, welche über zueinander symmetrisch angeordnete, unterbrochene Schweißnähte 19, 19' zu einem T-Stoß 33 (wie bei den Figuren 4 und 5) miteinander verbunden sind.

Die Markierungen 20 liegen jeweils in Form einer Abfolge von an der Längskante 32 gefrästen dreieckigen, rechteckigen und halbkreisförmigen Ausklinkungen (Aussparungen 22; vgl. Fig. 12) vor und umfassen jeweils einen Startpunkt 23' (Ausklinkungen "f" gemäß Fig. 3), eine Reihe von Halbkreisen 28 (Ausklinkungen "i" gemäß Fig. 3) und einen Endpunkt 24 (Ausklinkung "a" bzw. "b" gemäß Fig. 3). Die Schweißnähte 19 sind in Fig. 6 mit Strichlinien bezeichnet. Die Zahl der Halbkreise 28 (im vorliegenden Fall 5 Halbkreise) entspricht einer Dicke (bemessen in mm) der Schweißnaht.

Allerdings werden die Schweißnähte 19, 19' in einer anderen Reihenfolge gezogen, nämlich zuerst die beiden (bzw. mehrere) Schweißnähte 19 nacheinander in Richtung R auf einer Seite des Mittelstegs (Bauteils 10) und danach, nach Umdrehung mit dem Manipulator 17 die Schweißnähte 19' auf der anderen Seite des Mittelstegs. Der Schweißkopf (Arbeitswerkzeug 14) bewegt sich beim Ziehen jeder Schweißnaht 19, 19' in einer der Richtung R entgegengesetzten Richtung R1.

Zur Reduktion von Schweißverzug kann vorgesehen sein, dass das auf Basis der detektieren Markierungen 20 erstellte Gesamt-Arbeitsprogramm des Schweißroboters auch die Reihenfolge der zu erstellenden Schweißnähte 19, 19' festlegt. So können im Datenspeicher vordefinierte Bedingungen hinterlegt sein, auf deren Basis bei Auffinden mehrere hintereinander angeordneter Markierungen 20 ein Gesamt-Arbeitsprogramm für den Schweißroboter generiert wird, bei welchem zunächst an einem Ende der Schweißbaugruppe 31 eine Schweißnaht 19 an der Vorderseite und als zweite Schweißnaht eine Schweißnaht 19' an der anderen Seite der Schweißbaugruppe 31 hergestellt wird. Sodann werden die weiteren Schweißnähte, gegebenenfalls, wiederum abwechselnd auf jeder Seite, erstellt.

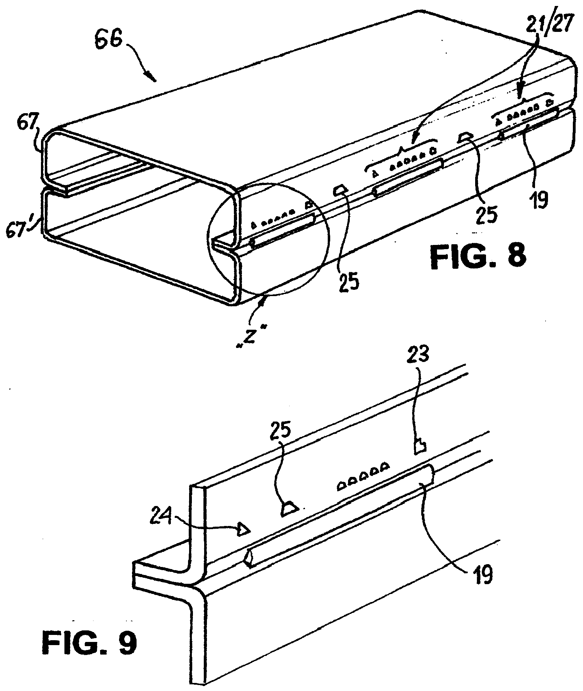

In den Figuren 8 und 9 ist eine Schweißbaugruppe 66 dargestellt. Die Schweißbaugruppe 66 umfasst zwei gleiche Bauteile 10, 11 (C-Profile 67, 67'), deren nach innen abgebogene Längskanten 68, 68' von der Seite her nicht sichtbar sind. An Stelle von Markierungen 20 in Form von Ausklinkungen in den Endkanten sind deshalb eingravierte Markierungen 21 vorgesehen. Die Markierungen 21 werden in Form von sehr präzise mit der Lasertechnik hergestellten Gravuren 27 vorzugsweise ohne Beschädigungen der Oberflächenstruktur eingebracht. Jede eingravierte Markierung 21 umfasst im dargestellten Ausführungsbeispiel folgende Informationen:
- eine Teilmarkierung "e" gemäß Fig. 3 als Startpunkt 23;
- fünf voneinander beabstandete Halbkreise (Teilmarkierung "j" gemäß Fig. 3 als Angabe der Schweißnaht-Dicke; im vorliegenden Fall 5mm);
- eine Teilmarkierung "a" gemäß Fig. 3 als Endpunkt 24 der Schweißnaht.

Zwischen den sich benachbarten Markierungen 21 (Gravuren 27) sind noch Markierungen für no-go-areas 25 vorgesehen, welche von dem Bilderkennungssystem 13 erfasst und mit dem Schweißkopf (Arbeitswerkzeug 14) nicht kontaktiert werden dürfen werden. Die no-go-area 25 wird als trapezförmige Kennzeichnung gemäß Fig. 3; Punkt k) bezeichnet. Der zugehörige Steuerbefehl enthält eine Information darüber, welcher Bereich, ausgehend von der Markierung, nicht kontaktiert werden darf.

Eine in den Figuren 10 und 11 dargestellte Schweißbaugruppe 34 umfasst ein plattenförmiges Bauteil 35 und zwei auf seiner Flachseite zueinander parallel angeordnete Bauteile 36, 36' in Form von Winkelprofilen, deren kürzere L-Schenkel 37, 37' aufeinander gerichtet sind. Die Winkelprofile 36, 36' weisen jeweils eine dem L-Schenkel 37, 37' abgewandte Längskante 38, 38' mit daran eingebrachten Markierungen 20 (Aussparungen) auf, welche durch das Bilderkennungssystem 13 zu erfassen sind.

Die Winkelprofile 36, 36' werden von außen verschweißt, nachdem die Markierungen 20 von dem Bilderkennungssystem 13 erfasst sind und entsprechend vordefinierter Steuerbefehl entsendet wurden. Das Verschweißen der beiden Winkelprofile 36, 36' mit dem Bauteil 35 an der Innenseite ist nicht vorgesehen.

Bei den Winkelprofilen 36 und 36' handelt es sich um identische Teile mit identischen Markierungen 20 in Form von Durchbrüchen beziehungsweise Ausklinkungen, die von beiden Seiten der Winkelprofile sichtbar sind.

Bei aus Ausklinkungen oder Durchbrüchen bestehenden Markierungen 20 kann ein Problem entstehen, wenn die Markierungen von dem Bilderkennungssystem 13 von der falschen Seite erfasst werden. Wenn die Markierungen 20 spiegelsymmetrisch sind, kann das Bilderkennungssystem 13 nicht erkennen, von welcher Seite aus ein Bauteil angeschweißt werden soll. Das Problem kann dadurch gelöst werden, dass die Markierungen selbst nicht spiegelsymmetrisch sind sondern vielmehr, je nach Blickrichtung, ein unterschiedliches Erscheinungsbild aufweisen.

Die in Fig. 10 an der Längskante 38' angebrachte Markierung 20 ist in Fig. 12 im Detail dargestellt und mit "vorne" bezeichnet. Die in Fig. 10 an der Längskante 38 angebrachte Markierung 20 ist in Fig. 12 im Detail dargestellt und mit "hinten" bezeichnet.

Die Markierung 20 beinhaltet in der Ansicht von "vorne" (vgl. Fig. 12) folgende Informationen:
- eine Teilmarkierung "a" gemäß Fig. 3 als Endpunkt 24 der Schweißnaht.
- fünf Halbkreise (Teilmarkierung "i" gemäß Fig. 3 als Angabe der Schweißnaht-Dicke);
- eine Teilmarkierung "g" gemäß Fig. 3 als Startpunkt 23;
Erkennt das optische Bilderkennungssystem 13 diese Markierung, so führt es den Steuerbefehl zum Schweißen einer Schweißnaht auf der Sichtseite durch.

Blickt man von der Rückseite auf die Markierung 20, zu sehen an der Längskante 38 in Fig. 10, so stellt sich dieselbe Markierung 20 in ihrer Ansicht von "hinten" spiegelverkehrt (vgl. Fig. 12) folgendermaßen dar:
- eine Teilmarkierung "h" gemäß Fig. 3';
- fünf Halbkreise (Teilmarkierung "i" gemäß Fig. 3 als Angabe der Schweißnaht-Dicke);
- eine Teilmarkierung "b" gemäß Fig. 3 als Endpunkt 24 der Schweißnaht.
Erkennt das optische Bilderkennungssystem 13 diese spiegelverkehrte Markierung 20, so führt es den Steuerbefehl zum Schweißen einer Schweißnaht auf der Rückseite durch.

Die Fig. 11 zeigt zwei auf diese Weise an den Außenseite der Winkelprofile 36, 36' erzeugte Schweißnähte 19, 19' (Kehlnähte).

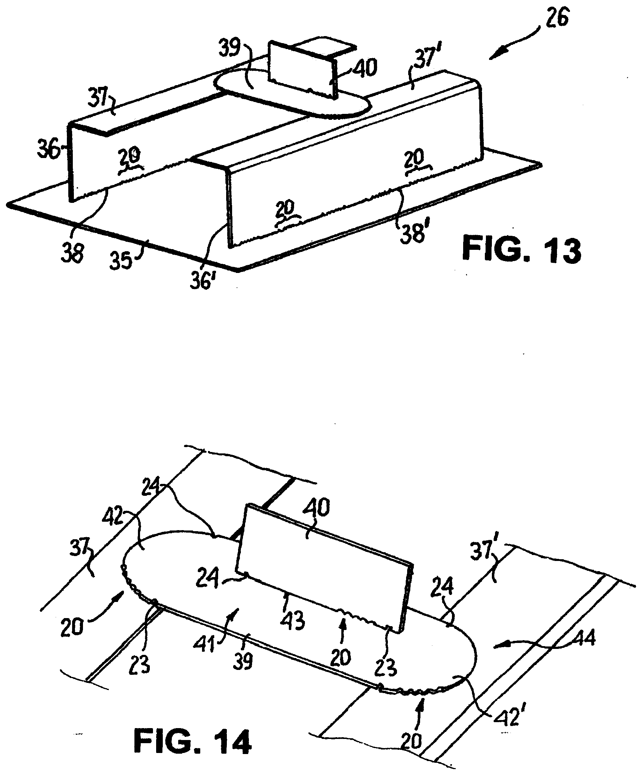

Den Figuren 13 und 14 ist eine Schweißbaugruppe 26 zu entnehmen, welche die Schweißbaugruppe 34 sowie die zusätzlichen Bauteile 39; 40 umfasst, nämlich eine plattenförmige, flach auf die L-Schenkel 37, 37' gelegte Lasche (Bauteil 39) und ein hochkant auf eine Oberseite 41 der Lasche gestelltes Plattenelement (Bauteil 40). Das Bauteil 39 (Lasche) stützt sich mit seinen halbkreisförmigen Endbereichen 42, 42' an den L-Schenkeln 37, 37' ab.

An den halbkreisförmigen Endbereichen 42, 42' sind bogenförmig verlaufende Markierungen 20 (Ausklinkungen) eingebracht, welche jeweils folgende Informationen beinhalten:
- eine Teilmarkierung "g" bzw. "h" gemäß Fig. 3 als Startpunkt 23 bzw. 23';
- fünf Halbkreise (Teilmarkierung "i" gemäß Fig. 3 als Angabe der Schweißnaht-Dicke);
- eine Teilmarkierung "b" gemäß Fig. 3 als Endpunkt 24 der Schweißnaht 19 bzw. 19'.

Die bogenförmig verlaufenden Schweißnähte 19, 19' (Kehlnähte) bilden einen Überlappstoß 44 aus.

Weiterhin ist an einer mit dem Bauteil 39 zu verbindenden Längskante 43 des Bauteils 40 die Markierung 20 eingebracht, welche einen Startpunkt 3 (Rechteck "f" gemäß Fig. 3), fünf Halbkreise (Teilmarkierung "i") sowie eine Teilmarkierung "a" bzw. "b" gemäß Fig. 3 als Endpunkt 24 umfasst. Die 5mm dicke Schweißnaht wird nur auf einer Seite, von dem Startpunkt 23 beginnend, gezogen.

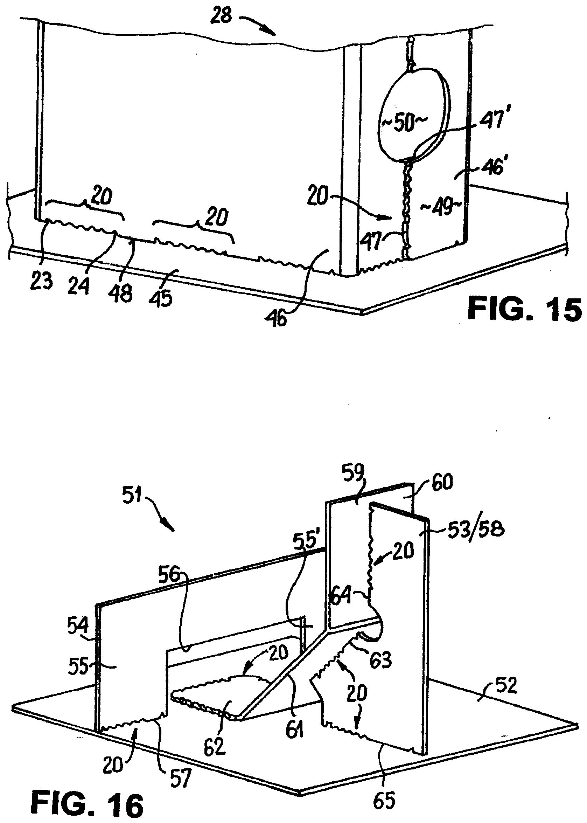

Eine andere Schweißbaugruppe 28, bestehend aus zwei auf ein plattenförmiges Bauteil 45 hochkant gestellten C-Profilen (Bauteile 46, 46') zeigt die Fig. 15. Die C-Profile 46, 46' sind mit ihren Längskanten 47, 47' aufeinander gerichtet und überlappen sich dort geringfügig. An einer dem Plattenelement 45 zugewandten, durch die C-Profile 46, 46' ausgebildeten Umlaufkante 48 sind Markierungen 20 (Ausklinkungen) eingebracht, welche jeweils einen Startpunkt 23, fünf Halbkreise (Teilmarkierung "i") und einen Endpunkt 24 umfassen. Es wird eine umlaufende, aus mehreren unterbrochenen Kehlnähten bestehende Schweißverbindung ausgebildet. An der senkrecht zum Plattenelement 45 verlaufenden Längskanten 47 des C-Profils 46 (in Figur 15 ist nur eine Längskante 47 sichtbar) sind ebenso Markierungen 20 mit Informationen (Teilmarkierungen wie an der Umlaufkante 48) eingebracht. Die sichtbaren Längskanten 47, 47' sind noch durch eine an einer Schmalwand 49 eingebrachte Öffnung 50 unterbrochen. Es werden nur außen liegende Schweißnähte eingebracht.

Eine weitere in Fig. 16 offenbarte Schweißbaugruppe 28 stellt eine räumliche Konstruktion dar, welche ein plattenförmiges Bauteil 52 (Basiselement) umfasst, an welchem in unterschiedlichen Ebenen andere Bauteile 53, 54, 55 angeordnet und dort zu verschweißen sind. Das plattenförmige Bauteil 54 weist eine Aussparung 56 und zwei C-Schenkel 55, 55' auf, mit denen sich an dem Bauteil 52 (Basiselement) abstützen. Wie die Figur zeigt, ist an einer Verbindungskante 57 des C-Schenkels 55 mit dem Bauteil 52 eine Markierung 20 eingebracht.

Das Bauteil 53 ist senkrecht zum Bauteil 52 und zugleich zum Bauteil 54 angeordnet und bildet eine Teilstütze 58 für ein weiteres Bauteil 59 aus, welches drei zueinander geneigte Plattenelemente 60, 61, 62 umfasst. Das eine Plattenelement 60 und das zweite, mittlere Plattenelement 61 ist mit dem senkrecht zum Bauteil 52 (Basiselement) angeordneten Bauteil 53 durch Schweißen verbunden. Das dritte Plattenelement 62 durchdringt die Aussparung 56 und liegt flach auf dem Bauteil 52 (Basiselement). Das mittlere, geneigte Plattenelement 61 stützt sich an einer ebenso geneigten Verbindungskante 63 des Bauteils 53 ab. Insgesamt umfasst die plattenförmige Teilstütze 58 (Bauteil 53) drei Verbindungskanten 63, 64 und 65. An der senkrecht zum Bauteil 52 (Basiselement) angeordneten Verbindungskante 64 stützt sich das Plattenelement 60 des Bauteils 59 ab. Die Verbindungskante 65 ist wiederum dem Bauteil 52 (Basiselement) zugewandt.

An allen Verbindungskanten 63, 64, 65 sowie am dritten Plattenelement 62 des Bauteils 59 sind Markierungen 20 (Ausklinkungen) eingebracht. Das dritte Plattenelement 62 bildet zusammen mit dem Bauteil 52 (Basiselement) einen nicht gezeigten Überlappstoß.

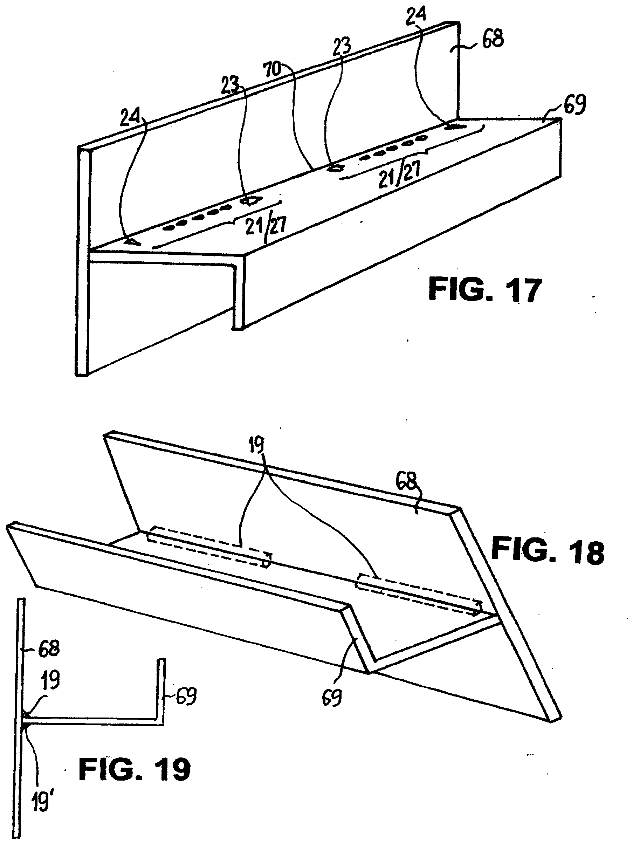

Den Einsatz von Markierungen 21 (Gravuren 27) zeigen auch die Figuren 17 bis 19. Die lasergravierten Markierungen 21 sind an einem Winkelprofil 69 entlang seiner Verbindungskante 70 mit einem Plattenelement 68 eingebracht. Ein Rechteck mit zwei Halbkreisen gemäß Fig. 3, Punkt d) wird von dem Bilderkennungssystem 13 als Startpunkt 23 für die Einbringung einer Schweißnaht 19, 19' an beiden Seiten des Winkelprofils 69 wiedererkannt. Die Markierungen 21 sind auf nur einer Seite des Winkelprofils 69 platziert. Bei Gravuren mit Abstand zu einer zu verschweißenden Kante ist das Anlernen mit dem entsprechenden Abstand vorzunehmen oder es ist ein Versatz im Programm zu definieren.

Alle oben aufgeführten Bauteile können an der Spannvorrichtung 16 mechanisch fest geklemmt oder/und mit kurzen Schweißheften oder -punkten aneinander fixiert werden.

**Bezugszeichenliste:**

| | | | |
|---|---|---|---|
| 10 | Bauteil | 35 | Bauteil (Fig. 10) |
| 11 | Bauteil | 36, 36' | Bauteil (Winkelprofil; Fig. 10) |
| 12 | Industrieroboter (Schweißroboter) | 37, 37' | L-Schenkel |
| 13 | Bilderkennungssystem | 38, 38' | Längskante |
| 14 | Arbeitswerkzeug | 39 | Bauteil (Fig. 13) |
| 15 | Datenspeicher | 40 | Bauteil (Fig. 13) |
| 16 | Spannvorrichtung | 41 | Oberseite (v. 39) |
| 17 | Manipulator | 42, 42' | Endbereich |
| 18 | Schweißroboter | 43 | Längskante |
| 19 | Schweißnaht (Kehlnaht) | 44 | Überlappstoß |
| 19' | Schweißnaht (Kehlnaht) | 45 | Bauteil (Plattenelement) |
| 20 | Markierung | 46, 46' | Bauteil (C-Profil) |
| 21 | Markierung | 47, 47' | Längskante (Fig. 15) |
| 22 | Aussparung | 48 | Umlaufkante |
| 23, 23' | Startpunkt | 49 | Schmalwand (Fig. 15) |
| 24 | Endpunkt | 50 | Öffnung |
| 25 | no-go-area | 51 | Schweißbaugruppe |
| 26 | Schweißbaugruppe | 52 | Bauteil (Basiselement) |
| 27 | Gravur | 53 | Bauteil (Plattenelement) |
| 28 | Schweißbaugruppe | 54 | Bauteil (Plattenelement) |
| 29 | Kamera | 55, 55' | C-Schenkel |
| 30 | Sensor | 56 | Aussparung |
| 31 | Schweißbaugruppe | 57 | Verbindungskante |
| 32 | Längskante | 58 | Teilstütze |
| 33 | T-Stoß | 59 | Bauteil |
| 34 | Schweißbaugruppe | 60 | Plattenelement (Fig. 16) |
| 61 | Plattenelement | | |
| 62 | Plattenelement | | |
| 63 | Verbindungskante | | |
| 64 | Verbindungskante | | |
| 65 | Verbindungskante | | |
| 66 | Schweißbaugruppe | | |
| 67, 67' | C-Profil | | |
| 68 | Bauteil (Fig. 17) | | |
| 69 | Bauteil | | |
| 70 | Verbindungskante | | |
| 71 | Halbkreis (z.B. Fig. 4) | | |
| 100 | Anlage | | |
| a) bis k) | Teilmarkierung | | |
| R, R1 | Richtung (Fig. 6) | | |
| TSM | Steuerungsmodul | | |

## Patentansprüche

1. Verfahren zum Verbinden, vorzugsweise zum Verkleben oder Verschweißen, von Bauteilen (10, 11, 35, 36, 36', 39, 40, 45, 46, 46', 52, 53, 54, 55, 59, 68, 69) auf Basis eines EDV-Arbeitsbasisprogrammes und mit Hilfe eines on- oder offline-programmierbaren, lernfähigen Industrieroboters (12) mit einem daran gekoppelten optischem Bilderkennungssystem (13), bei welchem sich die Bewegungsabläufe wenigstens eines Arbeitswerkzeugs (14) des Industrieroboters (12) in einen an den Industrieroboter gekoppelten Datenspeicher (15) einprogrammieren oder einteachen lassen,
**dadurch gekennzeichnet, dass**
- die miteinander zu verbindenden Bauteile (10, 11, 35, 36, 36', 39, 40, 45, 46, 46', 52, 53, 54, 55, 59, 68, 69) provisorisch geheftet oder in einer Spannvorrichtung (16), vorzugsweise in einem beweglichen Manipulator (17) fixiert werden;
- das optische Bilderkennungssystem (13) die zu verbindenden Bauteile (10, 11, 35, 36, 36', 39, 40, 45, 46, 46', 52, 53, 54, 55, 59, 68, 69) erfasst und auf das Vorhandensein von wenigstens einer in oder an den Bauteilen (10, 11, 35, 36, 36', 39, 40, 45, 46, 46', 52, 53, 54, 55, 59, 68, 69) angebrachten Markierung (20; 21) überprüft;
- eine vom optischen Bilderkennungssystem (13) erfasste Markierung (20; 21) mit einem im Datenspeicher (15) des Industrieroboters (12) hinterlegten Satz von Markierungen abgeglichen wird, wobei wenigstens eine im Datensatz des Industrieroboters (12) hinterlegte Markierung wenigstens einen Steuerbefehl für den Industrieroboter (12) definiert.

2. Verfahren nach Anspruch 1, **dadurch gekennzeichnet, dass**
- die vom Bilderkennungssystem (13) erfasste Markierung (20; 21) eine graduelle Abweichung zu der im Datensatz hinterlegten Markierung (20; 21) aufweist,
- eine Wahrscheinlichkeit dafür definiert ist, dass die vom Bilderfassungssystem (13) erfasste abweichende Markierung (20, 21) der im Datensatz hinterlegten Markierung (20; 21) entspricht,
- bei einer vordefinierten Wahrscheinlichkeit, vorzugsweise bei einer vordefinierten Wahrscheinlichkeit, die größer als 95% ist, der abweichenden Markierung (20; 21) derjenige Steuerbefehl zugeordnet wird, der der im Datenspeicher hinterlegten Markierung (20; 21) zugeordnet ist.

3. Verfahren nach Anspruch 1, **dadurch gekennzeichnet, dass** bei Feststellung einer vordefinierten Wahrscheinlichkeit oder bei Übereinstimmung von erfasster Markierung (20; 21) und im Datensatz hinterlegter Markierung (20; 21) der Steuerbefehl ausgeführt wird, der der Markierung (20; 21) Markierung zugeordnet ist und die Bauteile (10, 11, 35, 36, 36', 39, 40, 45, 46, 46', 52, 53, 54, 55, 59, 68, 69) miteinander verbunden werden.

4. Verfahren nach einem der Ansprüche 1 bis 3, **dadurch gekennzeichnet, dass** das optische Bilderkennungssystem die Bauteile (10, 11, 35, 36, 36', 39, 40, 45, 46, 46', 52, 53, 54, 55, 59, 68, 69) auf das Vorhandensein einer weiteren in oder an den Bauteilen (10, 11, 35, 36, 36', 39, 40, 45, 46, 46', 52, 53, 54, 55, 59, 68, 69) angebrachten Markierung (20; 21) überprüft und bei Feststellung einer solchen Markierung (20; 21) der Industrieroboter die aus der Markierung ableitbaren Steuerbefehle ausübt.

5. Verfahren nach Anspruch 1 oder 2, **dadurch gekennzeichnet, dass** das Bilderkennungssystem (13) zunächst wenigstens zwei, vorzugsweise alle, an den in der Spanvorrichtung (16) fixierten Bauteile (10, 11, 35, 36, 36', 39, 40, 45, 46, 46', 52, 53, 54, 55, 59, 68, 69) enthaltene Markierungen erfasst und die aus den Markierungen (20; 21) ableitbaren Steuerbefehle in das einprogrammierte oder eingeteachte EDV-Arbeitsbasisprogramm des Industrieroboters (12) integriert und auf das Verbinden der Bauteile (10, 11, 35, 36, 36', 39, 40, 45, 46, 46', 52, 53, 54, 55, 59, 68, 69) bezogenes EDV-Gesamtprogramm erstellt wird und die Bauteile (10, 11, 35, 36, 36', 39, 40, 45, 46, 46', 52, 53, 54, 55, 59, 68, 69) auf Basis des Gesamtprogramms miteinander verbunden werden.

6. Verfahren nach einem der Ansprüche 1 bis 5, **dadurch gekennzeichnet, dass** es sich bei dem Industrieroboter (12) um einen Schweißroboter (18) handelt.

7. Verfahren nach einem der Ansprüche 1 bis 6, **dadurch gekennzeichnet, dass** die den Markierungen (20; 21) zugeordneten Steuerbefehle wenigstens eine, vorzugsweise mehrere der folgende Informationen für das auszuführende EDV-Gesamtprogramm bereitstellen:
- einen Startpunkt (23) und/oder einen Endpunkt (24) einer Schweißnaht (19) und/oder
- eine Schweißnahtform, beispielsweise eine Kehlnaht und/oder
- eine Drahtvorschub-Geschwindigkeit in Verbindung mit einer BewegungsGeschwindigkeit des Schweißkopfes, so dass aus Drahtvorschub-Geschwindigkeit und Schweißkopf-Geschwindigkeit eine vordefinierte Schweißnahtdicke realisierbar ist und/oder
- eine zeitliche Abfolge oder Priorisierung des Anbringens einer Schweißnaht (19) in Bezug auf eine andere Schweißnaht (19').

8. Verfahren nach einem der Ansprüche 1 bis 7, **dadurch gekennzeichnet, dass** zur Erhöhung der Arbeits- und/oder Funktionssicherung für die Bewegungssteuerung des Industrieroboters (12) no-go-areas (25) vordefiniert und im Datenspeicher (15) des Industrieroboters (12) hinterlegt und bei Generierung des EDV-Gesamtprogrammes berücksichtigt werden.

9. Bauteil (10, 11, 35, 36, 36', 39, 40, 45, 46, 46', 52, 53, 54, 55, 59, 68, 69) zur Verwendung in einem Verfahren nach einem der Ansprüche 1 bis 8, umfassend wenigstens eine optisch erkennbare Markierung (20; 21).

10. Bauteil (10, 11, 35, 36, 36', 39, 40, 45, 46, 46', 52, 53, 54, 55, 59, 68, 69) nach Anspruch 9, **dadurch gekennzeichnet, dass** es sich bei der Markierung (20; 21) um wenigstens eine Aussparung (22) oder Ausklinkung oder eine Gravur (27), einen Aufdruck oder um einen maschinenlesbaren Strichcode handelt.

11. Bauteil (10, 11, 35, 36, 36', 39, 40, 45, 46, 46', 52, 53, 54, 55, 59, 68, 69) nach einem der Ansprüche 9 oder 10, **dadurch gekennzeichnet, dass** eine Markierung (20; 21) wenigstens zwei Teilmarkierungen, wie Startpunkt (23) und Endpunkt (24) umfasst.
